# EUROPÄISCHE PATENTSCHRIFT

(11) **EP 1 132 992 B1**
(45) Veröffentlichungstag und Bekanntmachung des Hinweises auf die Patenterteilung: **25.04.2007**
(21) Anmeldenummer: 01105714.8
(22) Anmeldetag: 07.03.2001
(51) Int. Cl.: H01M 10/54, B07C 5/34, G01T 1/29, H04N 1/028, G03B 42/02

(54) **Detektor zum Messen der Dosisleistung von Röntgenstrahlen sowie Vorrichtung zum Sortieren von Altbatterien und/oder Altakkumulatoren nach ihrem Typ**
Detector for measuring X-ray -doses and device for sorting old batteries and/or old accumulators by type
Détecteur de mesure de doses de rayons X et dispositif pour trier les batteries anciennes et/ou accumulateurs anciens par type

(30) Priorität: 08.03.2000 DE 10010556
(43) Veröffentlichungstag der Anmeldung: 12.09.2001
(73) Patentinhaber: 3V Consulting GmbH, 28195 Bremen (DE)
(72) Erfinder: Rausch, Sven, Dr., 28195 Bremen (DE); Molchin, Thure, 28213 Bremen (DE)
(74) Vertreter: von Ahsen, Erwin-Detlef

(56) Entgegenhaltungen:
- EP-A- 0 210 505
- EP-A- 0 363 522
- DE-A- 19 610 093
- DE-B- 1 035 802
- US-A- 4 417 140

## Beschreibung

Die Erfindung betrifft Vorrichtung zum Sortieren von Altbatterien und/oder Altakkumulatoren (Zellen) nach ihrem Typ mit einer Erkennungsstation zum Durchleuchten der Altbatterien und/oder Altakkumulatoren mit Röntgenstrahlen, mit einem Detektor zum Messen der Dosisleistung und mit einer nachfolgenden Sortierstation zum Sortieren der Altbatterien und/oder Altakkumulatoren nach ihrem Typ anhand der von dem Detektor gemessenen Dosisleistung.

Eine solche Vorrichtung zum Sortieren von Altbatterien und/oder Altakkumulatoren ist durch die DE 196 10 093 A1 bekannt.

Die heute am Markt verfügbaren Batterien und Akkumulatoren enthalten, je nach ihrem elektrochemischen Zelltyp, in unterschiedlichen Konzentrationen besonders giftige Schwermetalle, wie beispielsweise Quecksilber, Cadmium oder Blei. Damit die giftigen Schwermetalle in gebrauchten Altbatterien oder Altakkumulatoren nicht über den Hausmüll in die Umwelt gelangen, werden sie heute in den meisten industrialisierten Ländern gesammelt, teilweise indem sie über den Handel zurückgenommen werden. Im Handel sind hierzu Sammelbehälter aufgestellt, in denen das Publikum seine gebrauchten Altbatterien und Altakkumulatoren einwerfen kann. In den Sammelbehältern liegt somit ein Gemisch unterschiedlicher Altbatterien und Altakkumulatoren mit unterschiedlichem elektrochemischen Zelltyp vor.

Einige Batterien und Akkumulatoren enthalten hochpreisige Metalle, wie beispielsweise Silber, Nickel, Cadmium oder Zink, in Konzentrationen, die wesentlich über den abbauwürdigen Konzentrationen in den entsprechenden natürlichen Erzen liegen. Es liegt daher nahe, diese Batterietypen metallurgisch zu verwerten. Wesentliche Voraussetzung für ein ökonomisches, metallurgisches Recycling ist allerdings eine hohe Sortenreinheit der zu verwertenden Batterien. Die in den Sammelbehältern eingeworfenen Altbatterien und Altakkumulatoren müssen also je nach ihrem Typ, also je nach ihrem elektrochemischen Zelltyp, sortenrein sortiert werden. Derzeit geschieht diese Sortierung immer noch manuell, wobei maximale Sortenreinheitsgrade von deutlich unter 80% erreicht werden. Nur durch eine automatische Sortierung sind die für eine metallurgische Verwertung erforderlichen Reinheitsgrade von über 99% möglich.

Zur automatischen Sortierung von Altbatterien und Altakkumulatoren existieren bereits verschiedene Verfahren. So werden die Altbatterien und Altakkumulatoren nach der DE 196 10 093 A1 (entspricht EP 0 795 919 A2) an ihrem Röntgendurchleuchtungsbild bzw. an der Gesamttransmission der Röntgenstrahlung in einer Durchleuchtungsanordnung erkannt und entsprechend sortiert. In einem anderen Verfahren werden die Batterien über die Messung des Gewichts, des Formats, der ferromagnetischen Eigenschaften sowie der Wirbelstromcharakteristik beim Durchlaufen einer Spule erkannt (WO 94/19838, DE 692 03 091 T2, EP 0 580 241 A2). Nach einem dritten bekanntgewordenen Verfahren werden die Zellen mit einer konventionellen Bildverarbeitung über ein Label identifiziert ("Proceedings of the 4^{th} International Battery Recycling Congress", Hamburg, Germany, 1-3 July, 1998).

Entscheidend für die Wirtschaftlichkeit einer automatischen Batteriesortieranlage ist neben der Sortenreinheit die maximal erreichbare Sortiergeschwindigkeit. Bei einem in der DE 196 10 093 A1 bzw. EP 0 795 919 A2 beschriebenen Ausführungsbeispiel wird die Röntgengesamttransmission einer einzelnen zugeführten Batterie in einer Röntgendurchleuchtungsanordnung über einen Sensor gemessen und mit Referenzdaten verglichen. Um eine wirtschaftliche Sortiergeschwindigkeit von wenigstens 10 Batterien pro Sekunde zu erreichen, muß bei einer typischen Batterielänge von 50 mm und einem für eine Sortierstation erforderlichen Abstand von ca. 10 cm zwischen den Batterien eine minimale Bandgeschwindigkeit von 1,5 m/sek. vorgesehen werden. Hieraus ergibt sich eine maximale Meßzeit je Batterie von maximal 30 ms. Die bisher bekannten Röntgendosisleistungsmeßgeräte, wie beispielsweise Zählrohre, Ionisationskammern, Szintillationszähler oder Halbleiterdetektoren, sind nicht in der Lage, Dosisleistungen bei dieser extrem kurzen Meßzeit mit einem maximal erlaubten relevanten Fehler von kleiner 0,1%, bezogen auf die Dosisleistung ohne Objekt im Strahlengang zu messen. Ferner ist es bei dieser extrem kurzen Meßzeit erforderlich, mit sehr hohen Dosisleistungen von 10 bis 10⁴ Gy/h (Luft) zu arbeiten. In einer Durchleuchtungsanordnung ergibt sich bei diesen hohen Dosisleistungen das Problem, daß bei der sequentiellen Zuführung der Batterien der Sensor zwischen den einzelnen Batterien ungeschützt der Primärstrahlung ausgesetzt ist. Konventionelle Detektoren werden hier schnell zerstört.

Aus der GB 2 132 343 A ist ein Verfahren und eine Vorrichtung zum Überwachen der Dicke eines Kerns eines elektrischen Kabels bekannt, bei dem ein Detektor mit einem Fototransistor und einen Röntgenlichtschirm, die durch einen Lichtleiter miteinander verbunden sind, verwendet wird.

Der Erfindung liegt das Problem zugrunde, eine Vorrichtung zum Sortieren von Altbatterien oder Altakkumulatoren nach ihrem Typ zu schaffen, durch die Altbatterien oder Altakkumulatoren, je nach ihrem elektrochemischen Zelltyp, auch über eine längere Betriebszeit sicher und wirtschaftlich erkannt und sortiert werden können. Konkret soll ein Detektor für eine solche Vorrichtung geschaffen werden, der auch ungeschützt hohen Dosisleistungen über eine lange Betriebszeit standhält, ohne zerstört zu werden.

Zur Lösung dieses Problems ist die erfindungsgemäße Vorrichtung dadurch gekennzeichnet, daß der Detektor zum Messen der Dosisleistung von Röntgenstrahlung für hohe Dosisleistungen bis 10⁴ Gy/h einen Röntgenleuchtschirm und einen Fototransistor aufweist, die durch einen Lichtleiter aus Kunststoff miteinander verbunden sind.

Bei diesem für die erfindungsgemäße Vorrichtung verwendeten Detektor trifft die Röntgenstrahlung auf den Röntgenleuchtschirm, der hierdurch zum Leuchten angeregt wird. Das von dem Leuchtschirm ausgehende Licht wird durch den Kunststofflichtleiter zum Fototransistor geleitet, der die Helligkeit des vom Röntgenleuchtschirm ausgehenden Lichtes mißt. Die Helligkeit des vom Röntgenleuchtschirm ausgehenden Lichtes ist in gewissen Grenzen proportional zur Dosisleistung am Röntgenleuchtschirm. Durch die erfindungsgemäße Anordnung ist der Fototransistor nicht in dem unmittelbaren Einwirkungsbereich der Röntgenstrahlung angeordnet und kann somit nicht durch die Röntgenstrahlung beschädigt oder gar zerstört werden. Als Lichtleiter ist ein Kunststofflichtleiter vorzusehen, da ein Lichtleiter aus Glas sehr schnell braun und damit unbrauchbar werden würde. Dieser Detektor ist geeignet, Röntgenstrahlung mit einer Dosisleistung von bis zu 10⁴ Gy/h in weniger als 30 ms mit einer Genauigkeit von kleiner/gleich 0,2 %, insbesondere 0,1 %, zu messen. Besonders bei Röntgenstrahlung hoher Energie, insbesondere im Bereich von etwa 160 keV, läßt sich der erfindungsgemäße Detektor vorteilhaft verwenden.

Der Lichtleiter weist vorzugsweise einen Durchmesser von 1 mm auf. Da der Lichtleiter das von dem Röntgenleuchtschirm ausgesendete Licht analog einem elektrischen Widerstand über seine Länge dämpft, also abschwächt, ist es zur Schonung des Fototransistors zweckmäßig, einen Lichtleiter mit wenigstens 1 m Länge, insbesondere mit 10 m Länge, vorzusehen. Ein einadriger Lichtleiter reicht zur Herstellung eines wirksamen Detektors aus.

Oft ist es zweckmäßig, Zusatzinformationen über die gerade zu untersuchende Altbatterie bzw. den gerade zu untersuchenden Altakkumulator zu haben, um die Sortiergenauigkeit weiter zu erhöhen. Als Zusatzinformation dient hier insbesondere die Größe der Altbatterie bzw. des Altakkumulators. Diese kann beispielsweise durch ein vorgeschaltetes Sieben des Batterie-/Akkumulatorgemisches bestimmt werden. Nach einer Weiterbildung der Erfindung ist jedoch vorgesehen, wenigstens zwei Detektoren bzw. Röntgenleuchtschirme übereinander anzuordnen. Je nach dem, an wie vielen Detektoren, von unten nach oben gezählt, sich die gemessene Dosisleistung bei Durchgang einer Altbatterie oder eines Altakkumulators durch den Strahlengang ändert, liegt eine Zusatzinformation über die Größe der gerade untersuchten Batterie vor.

Ein Förderer, mit dem die Altbatterien oder Altakkumulatoren durch die Erkennungsstation gefördert werden, ist ebenfalls in besonderer Weise ausgebildet. Der Förderer weist eine Transportfläche auf, die quer zur Transportrichtung gegenüber der Horizontalen geneigt ist. Um ein seitliches Herunterfallen der Altbatterien oder Altakkumulatoren zu verhindern, ist eine seitliche Führung vorgesehen. Infolge der Reibung der Altbatterien oder Altakkumulatoren an der Führung werden diese sich immer so ausrichten, daß sie mit ihrer Längsachse in Transportrichtung weisen. Hierdurch werden die Altbatterien und Altakkumulatoren immer in genau definierter Orientierung durch die Erkennungsstation gefördert. Selbstverständlich kann diese Maßnahme nicht sicherstellen, daß die Batterien immer entweder mit ihrem Plus- oder Minuspol nach vorne durch die Erkennungsstation gefördert werden. Dieses ist aber auch für das vorliegende Sortierproblem unerheblich.

Eine weitere Besonderheit der Erfindung stellt die Sortierstation dar. Durch die US 4,848,590 ist es bekannt, Gegenstände an einer Rampe herunterrutschen zu lassen. Aufgrund von Signalen aus einer vorgeschalteten Erkennungsstation werden die Gegenstände an unterschiedlichen Positionen während des Herunterrutschens an der Rampe durch entsprechende Druckluftdüsen von der Rampe weg in unterschiedliche Kanäle geblasen und, nach ihrem Typ sortiert, nebeneinander auf einem Förderband abgelegt. Problematisch hierbei ist, daß insbesondere bis zur untersten Druckluftdüse an der Rampe ein erheblicher Transportweg zurückgelegt wird, auf dem zu viel Störungen auftreten können, die ihrerseits zu Fehlwürfen und mithin schlechten Sortierergebnissen führen können.

Es ist daher zweckmäßig, wenn sich der Erkennungsstation unmittelbar die Sortierstation anschließt. Hierdurch wird der Transportweg zwischen Erkennungsstation und Sortierstation auf ein Minimum reduziert, so daß etwaige Störungen auf diesem Transportweg nicht auftreten und zu Fehlwürfen beim anschließenden Sortieren der Altbatterien und Altakkumulatoren führen können. Es ist dabei ausreichend, wenn der Abstand der Erkennungsstation und der Sortierstation (vom Ausgang der Erkennungsstation zum Eingang der Sortierstation gemessen) maximal dem doppelten Abstand zweier aufeinanderfolgender Altbatterien oder Altakkumulatoren im Bereich der Erkennungsstation entspricht. Vorzugsweise wird maximal der einfache Abstand zweier aufeinanderfolgender Altbatterien oder Altakkumulatoren im Bereich der Erkennungsstation vorgesehen.

Nach einer konstruktiven Ausgestaltung werden die Altbatterien oder Altakkumulatoren am Eingang der Sortierstation von einem Förderer abgeworfen und zum Sortieren von ihrer ballistischen Flugbahn, je nach Typ, in unterschiedliche Richtungen abgelenkt. Unterschiedliche Typen von Altbatterien und Altakkumulatoren werden also etwa an derselben Stelle, je nach Typ, von ihrer ballistischen Flugbahn abgelenkt. Die Sortiermaßnahme findet für jeden Typ an etwa derselben Stelle, nah hinter der Erkennungsstation, statt, so daß störende Einflüsse weitestgehend ausgeschlossen werden können. Zum Ablenken der Altbatterien und Altakkumulatoren von ihrer ballistischen Flugbahn werden vorzugsweise Druckluftstöße eingesetzt.

Die Erfindung wird nachfolgend anhand eines in den Zeichnungen dargestellten Ausführungsbeispiels näher erläutert. Es zeigen:

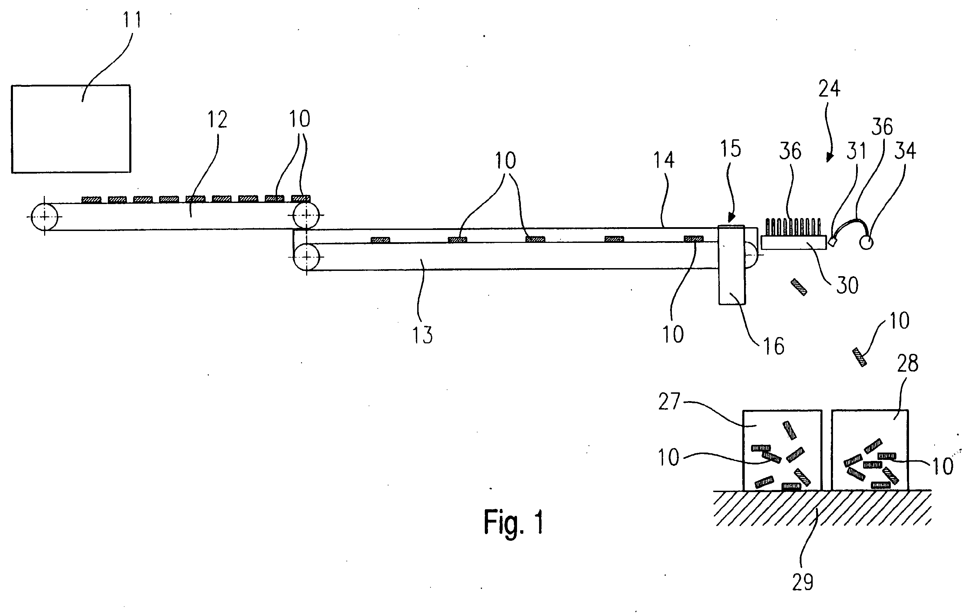

- Fig. 1: eine Vorrichtung mit den Erfindungsmerkmalen in Seitenansicht,

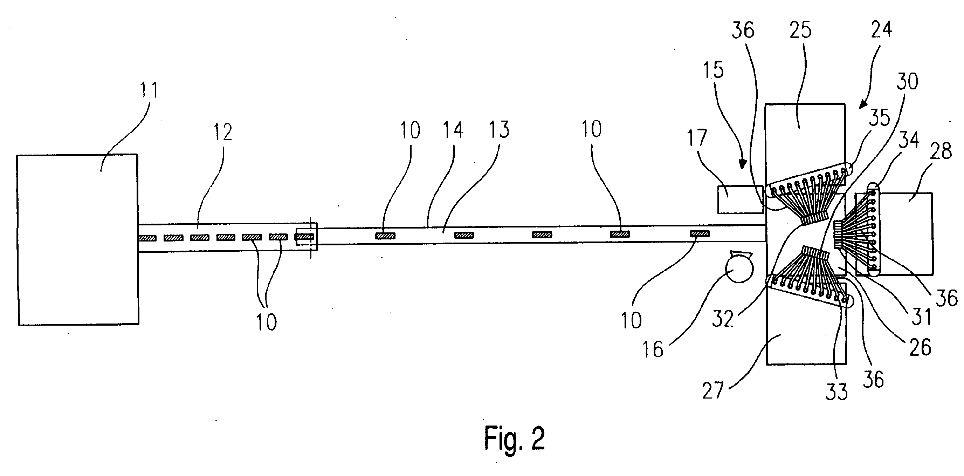

- Fig. 2: die Vorrichtung gemäß Fig. 1 in Draufsicht,
- Fig. 3: die Vorrichtung gemäß Fig. 1 in einer Rückansicht,
- Fig. 4: einen Detektor für eine Vorrichtung gemäß Fig. 1,

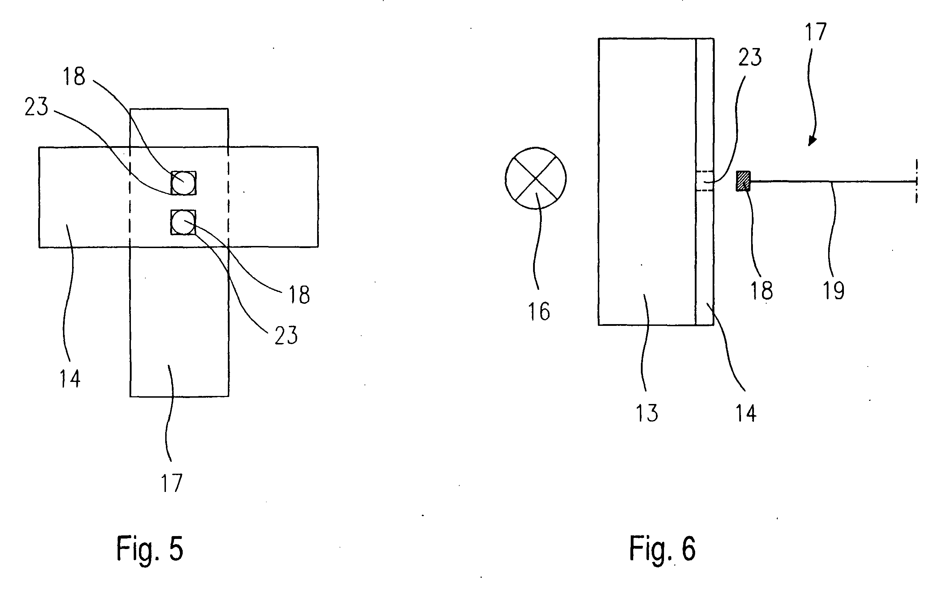

- Fig. 5: ein Detail der Vorrichtung gemäß Fig. 1 in Seitenansicht,
- Fig. 6: das Detail gemäß Fig. 5 in Draufsicht.

Ein Gemisch gebrauchter Batterien und Akkumulatoren mit unterschiedlichem elektrochemischen Zelltyp, nachfolgend kurz Zelle 10 genannt, wird über eine Dosiereinrichtung 11 einzeln nacheinander auf einem Förderer, nämlich einem Förderband 12, abgelegt. Durch das Förderband 12 werden die Zellen 10 auf einem zweiten Förderer, hier wiederum einem Förderband 13, abgelegt. Das Förderband 13 läuft schneller als das Förderband 12, so daß die Zellen 10 räumlich entzerrt werden, also der Abstand zwischen aufeinanderfolgenden Zellen 10 erhöht wird.

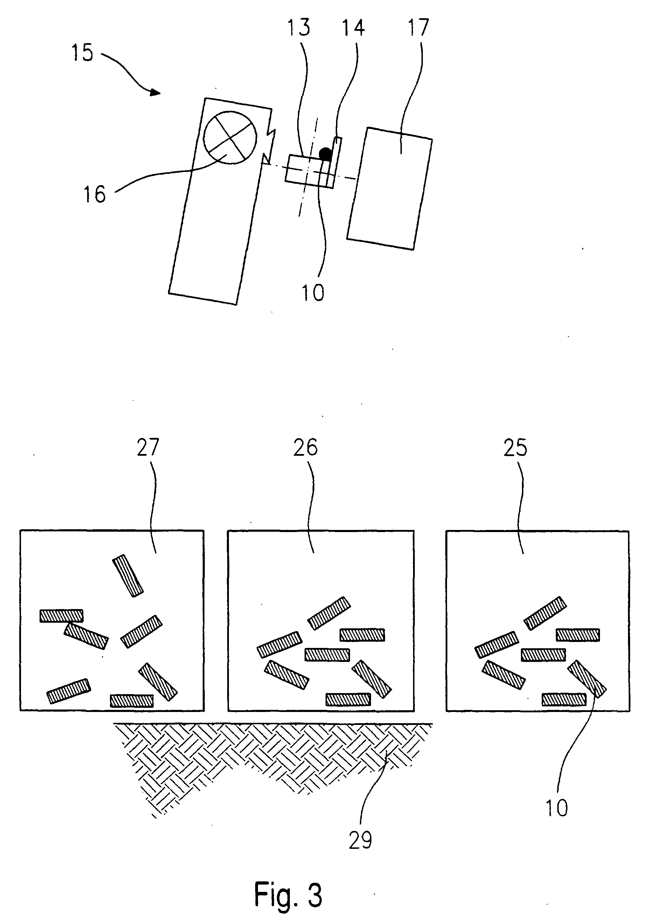

Das Förderband 13 weist eine gegenüber der Horizontalen quer zur Transportrichtung geneigte Transportfläche auf. In der Darstellung gemäß Fig. 3 fällt die Transportfläche nach rechts unten ab. Um ein seitliches Herunterfallen der Zellen 10 zu verhindern, ist eine seitliche Führung 14 vorgesehen. Durch Reibung der Zellen 10 an der Führung 14 sowie durch die Neigung des Förderbandes 13 richten sich die Batterien definiert hintereinander aus und werden so einer Erkennungsstation 15 sequentiell in definierter Ausrichtung zugeführt, nämlich mit ihrer Längsachse in Transportrichtung. Dabei können die einzelnen Zellen 10 - mal mit ihrem Pluspol, mal mit ihrem Minuspol - nach vorn der Erkennungsstation 15 zugeführt werden. Dieses ist für die Erkennung des elektrochemischen Zelltyps unerheblich. Das Erkennen des elektrochemischen Zelltyps in der Erkennungsstation 15 ist jedoch erheblich erleichtert, wenn die Richtung der Längsachse der Zelle 10 gegenüber der Transportrichtung vorher festgelegt ist. Im vorliegenden Fall wurde eine Ausrichtung der Längsachse der Zelle 10 in Transportrichtung gewählt.

In der Erkennungsstation 15 ist eine Röntgenquelle 16, im vorliegenden Fall eine Röntgenröhre, und auf der der Röntgenquelle 16 gegenüberliegenden Seite des Förderbandes 13 ein Detektor 17 vorgesehen. Röntgenquelle 16 und Detektor 17 sind im vorliegenden Fall so angeordnet, daß die Zellen 10 mit etwa senkrecht zur Längsachse der Zellen 10 gerichteter Röntgenstrahlung durchleuchtet werden.

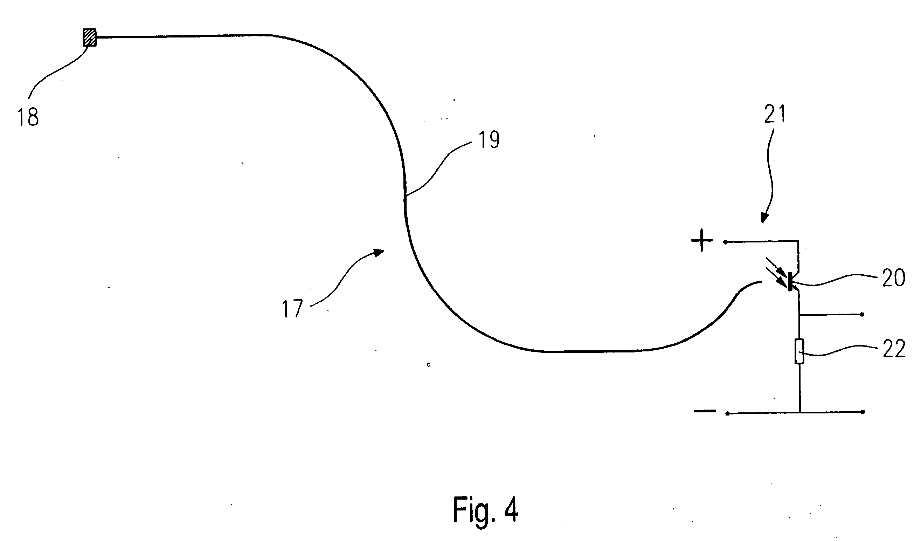

Der Detektor 17 mißt die auftreffende Dosisleistung, also die Gesamttransmission der Röntgenstrahlung durch die gerade zu bestimmende Zelle 10. Da aufgrund der nur sehr kurzen Zeit, die zur Bestimmung des elektrochemischen Zelltyps der gerade zu untersuchenden Zelle 10 zur Verfügung steht, nämlich maximal 30 ms, muß mit sehr energiereicher Röntgenstrahlung von der Röntgenquelle 16 gearbeitet werden. Herkömmliche Dosisleistungsmeßgeräte halten der hier erforderlichen hohen Dosisleistung von bis zu 10⁴ Gy/h (bei z. B. 160 keV) nicht stand. Der Detektor 17 ist daher in besonderer, näher in Fig. 4 gezeigter Weise ausgebildet. Der Detektor 17 weist einen Röntgenleuchtschirm 18 auf. Durch die auf den Röntgenleuchtschirm 18 treffende Röntgenstrahlung wird dieser zum Leuchten angeregt. In gewissen Grenzen ist die Helligkeit des mit Röntgenstrahlung bestrahlten Röntgenleuchtschirms 18 in weiten Grenzen proportional zur Dosisleistung. Der Röntgenleuchtschirm 18 steht mit einem Lichtleiter 19 aus Kunststoff in Kontakt. Der Lichtleiter 19 ist einadrig ausgebildet und weist einen Durchmesser von etwa 1 mm auf. Seine Länge beträgt 10 m. Das andere Ende des Lichtleiters 19 steht mit einem Fototransistor 20 einer Fototransistorschaltung 21 in Kontakt. Der Fototransistor 20 bzw. die Fototransistorschaltung 21 ist dabei außerhalb des Strahlungsfeldes der Röntgenquelle 16 angeordnet.

Der Fototransistor 20 ist mit einem Widerstand 22 in Reihe geschaltet. Durch Abgreifen der Spannung am Widerstand 22 wird die Helligkeit des Röntgenleuchtschirms 18 und mithin die Dosisleistung am Röntgenleuchtschirm 18 gemessen. Die abgegriffene Spannung am Widerstand 22 ist proportional zur Helligkeit und mithin zur Dosisleistung am Röntgenleuchtschirm 18.

Damit die Röntgenstrahlung ungehindert auf den Röntgenleuchtschirm 18 treffen kann, ist die Führung 14 mit einem Durchbruch 23 versehen. Im vorliegenden Fall besteht der Detektor 17 aus zwei übereinander angeordneten Röntgenleuchtschirmen 18. Jedem Röntgenleuchtschirm 18 ist dabei ein eigener Durchbruch 23 in der Führung 14 zugeordnet. Jeder Röntgenleuchtschirm 18 ist über ein eigenes Lichtleiterkabel 19 mit einem eigenen Fototransistor 20 einer eigenen Fototransistorschaltung 21 verbunden. Durch die Verwendung von zwei Röntgenleuchtschirmen 18 übereinander können Zusatzinformationen über die Größe der gerade untersuchten Zelle 10 gewonnen werden, wodurch die eindeutige Bestimmung des elektrochemischen Zelltyps erleichtert wird.

In der Erkennungsstation 15 werden durch eine geeignete Datenverarbeitungsanlage entsprechende Signale für eine Sortierstation 24 zum Sortieren der Zellen 10 nach ihrem elektrochemischen Zelltyp erzeugt. Die Sortierstation 24 schließt sich unmittelbar an die Erkennungsstation 15 an. Konkret ist zwischen dem Eingang der Sortierstation 24 und der Erkennungsstation 15 bzw. dem Röntgenleuchtschirm 18 etwa derselbe Abstand, wie zwischen zwei aufeinanderfolgenden Zellen 10 in der Erkennungsstation 15 vorgesehen. Im vorliegenden Fall sind in der Sortierstation 24 vier Sammelbehälter 25, 26, 27 und 28 angeordnet. In jedem der Sammelbehälter 25..28 wird ein bestimmter elektrochemischer Zelltyp einsortiert. Alternativ kann einer der Sammelbehälter 25..28 auch einer Restfraktion nicht identifizierbarer elektrochemischer Zelltypen zugeordnet sein.

Das Förderband 13 endet unmittelbar am Eingang zur Sortierstation 24. Hier werden die Zellen 10 mit der Bandgeschwindigkeit des Förderbandes 13, im vorliegenden Fall 1 m/s bis 5m/s, insbesondere 3 m/s, abgeworfen. Der Abstand zwischen dem Obertrum des Förderbandes 13 und einem Boden 29, auf dem die Sammelbehälter 25..28 stehen, beträgt etwa 1 bis 2 m. Bei dieser Höhe ist die ungestörte, ballistische Flugbahn der Zellen 10 unabhängig von ihrem Gewicht und Format. Der Sammelbehälter 28 ist so positioniert, daß die Zellen 10 bei ungestörter, ballistischer Flugbahn in den Sammelbehälter 28 treffen. Um die Zellen 10, die in einem der anderen Sammelbehälter 25, 26 oder 27 treffen sollen, sind Druckluftdüsen 30, 31 und 32 vorgesehen, mittels derer die Zellen 10 durch Druckluftstöße von ihrer ungestörten, ballistischen Flugbahn abgelenkt werden. Durch Betätigen der Druckluftdüse 30 wird die gerade vom Förderband 13 abgeworfene Zelle 10 in den Sammelbehälter 25 abgelenkt. Durch Betätigen der Druckluftdüse 31 trifft die gerade abgeworfene Zelle 10 in den Sammelbehälter 26, und das Betätigen der Druckluftdüse 32 sorgt schließlich für ein Treffen der gerade abgeworfenen Zelle 10 in den Sammelbehälter 27.

Jeder Druckluftdüse 30, 31 und 32 ist ein eigener Druckluftpufferbehälter 33, 34 bzw. 35 zugeordnet, durch die die Druckluftdüsen 30..32 über Zuleitungen 36 gespeist werden. Die Druckluftpufferbehälter 33..35 stehen ihrerseits in Verbindung mit einer geeigneten Druckluftquelle.

Die Druckluftdüsen 30..32 sind konkret eine Kombination aus mehreren, nebeneinander angeordneten Druckluftdüsen, die durch schnell arbeitende Magnetventile mit einem Gesamtzeitbedarf für das Ein- und Ausschalten von weniger als 10 ms und einer daraus folgenden effektiven Druckluftblaszeit von 20 ms oder weniger einen ausreichenden Impuls auf die Zelle 10 zu übertragen, um diese nach Verlassen des Förderbandes 13 seitlich links, seitlich rechts oder zu kurz in den entsprechenden Sammelbehälter 25, 26 oder 27 abzulenken.

Mit der hier gezeigten Sortiereinrichtung 24 können somit Zellen 10 mit vier unterschiedlichen elektrochemischen Zelltypen sortiert werden. Gegebenenfalls können auch zwei zusätzliche Sammelbehälter, in Transportrichtung des Förderbandes 13 gesehen links und rechts neben dem Sammelbehälter 28, vorgesehen sein, so daß insgesamt sechs Sammelbehälter für insgesamt sechs elektrochemische Zelltypen zur Verfügung stehen. Gegebenenfalls kann die Sortierung der Zellen 10 nach ihrem elektrochemischen Zelltyp aber auch mehrstufig erfolgen, wobei einer der Sammelbehälter 25..28, beispielsweise der Sammelbehälter 28, einer unsortierten Restfraktion zugeordnet ist. Diese unsortierte Restfraktion entspricht dann einem neuen Gemisch von Zellen 10 unterschiedlichen elektrochemischen Zelltyps, der dann erneut in einer zweiten Stufe sortiert wird. Gegebenenfalls können die Zellen 10 der Restfraktion anstatt in beispielsweise den Behälter 28 direkt auf ein weiteres Förderband geworfen werden, durch das sie wieder einer neuen Erkennungsstation und anschließend einer Sortierstation zugeführt werden. Die neue Erkennungsstation kann dabei gegebenenfalls auch nach einem anderen physikalischen Prinzip den elektrochemischen Zelltyp bestimmen.

Trotz bester Erkennungs- und Sortiertechnik wird es letztlich unvermeidlich bleiben, daß eine Restfraktion nicht zu sortierender Zellen 10, beispielsweise aufgrund von Beschädigungen oder starken Verschmutzungen an den Zellen 10, übrig bleibt. Wichtig für eine metallurgische Verwertung der Zellen 10 ist, daß die einem bestimmten elektrochemischen Zelltyp zugeordneten Sammelbehälter mit einem Sortenreinheitsgrad von größer/gleich 99% den jeweiligen gewünschten elektrochemischen Zelltyp enthalten. Die aufgrund von Beschädigungen oder starken Verschmutzungen unsortierbaren Zellen 10 sind zahlenmäßig vernachlässigbar und können gegebenenfalls anschließend manuell sortiert, endgelagert oder auf sonstige Weise endbehandelt werden.

### Bezugszeichenliste:

- 10: Zelle
- 11: Dosiereinrichtung
- 12: Förderband
- 13: Förderband
- 14: Führung
- 15: Erkennungsstation
- 16: Röntgenquelle
- 17: Detektor
- 18: Röntgenleuchtschirm
- 19: Lichtleiter
- 20: Fötotransistor
- 21: Fototransistorschaltung
- 22: Widerstand
- 23: Durchbruch
- 24: Sortierstation
- 25: Sammelbehälter
- 26: Sammelbehälter
- 27: Sammelbehälter
- 28: Sammelbehälter
- 29: Boden
- 30: Druckluftdüse
- 31: Druckluftdüse
- 32: Druckluftdüse
- 33: Druckluftpufferbehälter
- 34: Druckluftpufferbehälter
- 35: Druckluftpufferbehälter
- 36: Zuleitung

## Patentansprüche

1. Vorrichtung zum Sortieren von Altbatterien und/oder Altakkumulatoren (Zellen 10) nach ihrem Typ mit einer Erkennungsstation (15) zum Durchleuchten der Altbatterien und/oder Altakkumulatoren (Zellen 10) mit Röntgenstrahlen, mit einem Detektor (17) zum Messen der Dosisleistung und mit einer nachfolgenden Sortierstation (24) zum Sortieren der Altbatterien und/oder Altakkumulatoren nach ihrem Typ anhand der von dem Detektor (17) gemessenen Dosisleistung, **dadurch gekennzeichnet, daß** der Detektor (17) zum Messen der Dosisleistung von Röntgenstrahlung für hohe Dosisleistungen bis 10⁴ Gy/h einen Röntgenleuchtschirm (18) und einen Fototransistor (20) aufweist, die durch einen Lichtleiter (19) aus Kunststoff miteinander verbunden sind.

2. Vorrichtung nach Anspruch 1, **dadurch gekennzeichnet, daß** der, insbesondere einadrige, Lichtleiter (19) einen Durchmesser von 1 mm aufweist und/oder daß der Lichtleiter (19) wenigstens 1 m, insbesondere 10 m, lang ist.

3. Vorrichtung nach Anspruch 1 oder 2, **dadurch gekennzeichnet, daß** wenigstens zwei Detektoren (17) bzw. Röntgenleuchtschirme (18) übereinander angeordnet sind.

4. Vorrichtung nach einem der Ansprüche 1 bis 3, **gekennzeichnet durch** einen Förderer (13) zum Zuführen der Altbatterien und/oder Altakkumulatoren (Zellen 10) zu der Erkennungsstation (15), dessen Transportfläche quer zur Transportrichtung gegenüber der Horizontalen geneigt ist, wobei eine seitliche Führung (14) gegen das Herunterfallen der Altbatterien und/oder Altakkumulatoren (Zellen 10) vorgesehen ist.

5. Vorrichtung nach einem der Ansprüche 1 bis 4, **dadurch gekennzeichnet, daß** sich der Erkennungsstation (15) unmittelbar die Sortierstation (24) anschließt.

6. Vorrichtung nach Anspruch 5, **dadurch gekennzeichnet, daß** der Abstand der Erkennungsstation (15) und der Sortierstation (24) maximal der doppelte, vorzugsweise maximal der einfache, Abstand zweier aufeinanderfolgender Altbatterien und/oder Altakkumulatoren (Zellen 10) im Bereich der Erkennungsstation (15) ist.

7. Vorrichtung nach einem der Ansprüche 1 bis 6, **dadurch gekennzeichnet, daß** die Altbatterien und/oder Altakkumulatoren (Zellen 10) am Eingang der Sortierstation (24) von dem Förderer (13) abwerfbar und zum Sortieren von ihrer ballistischen Flugbahn je nach Typ in unterschiedliche Richtungen, insbesondere durch Druckluftstöße, ablenkbar sind.

## Claims

1. Device for classifying used storage batteries and/or used accumulators (cells 10) by their types, comprising an identifier station (15) for X-raying the used storage batteries and/or used accumulators (cells 10) by means of Roentgen rays, as well as a detector (17) for measuring the dosage rate and a downstream classifying station (24) for classifying the used storage batteries and/or used accumulators by their types with reference to the dosage rate measured by said detector (17), **characterised in that** said detector (17) for measuring the dosage rate of X-ray radiation for high dosage rates up to 10⁴ Gy/h includes a fluorescent X-ray screen (18) and a phototransistor (20), which are both interconnected to each other by means of an optical conductor (19) made of a synthetic material.

2. Device according to Claim 1, **characterised in that** said optical conductor (19), in particular straight-type conductor, presents a diameter of 1 mm and/or that said optical conductor (19) has a length of at least 1 m and of 10 m in particular.

3. Device according to Claim 1 or 2, **characterised in that** at least two detectors (18) or fluorescent X-ray screens (18), respectively, are superposed on each other.

4. Device according to any of the Claims 1 to 3, **characterised by** a conveyor (13) for feeding said used storage batteries and/or used accumulators (cells 10) to said identifier station (15), whose conveying surface is inclined transversely with respect to the conveying direction, relative to the horizontal, with a lateral guide (14) being provided to prevent said used storage batteries and/or used accumulators (cells 10) from dropping down.

5. Device according to any of the Claims 1 to 4, **characterised in that** said identifier station (15) is directly adjacent to said classifying station (24).

6. Device according to Claim 5, **characterised in that** the distance of said identifier station (15) from said classifying station (24) corresponds to the double distance at maximum, preferably to the distance at maximum, of two successive used storage batteries and/or used accumulators (cells 10) in the zone of said identifying station (15).

7. Device according to any of the Claims 1 to 6, **characterised in that** said used storage batteries and/or used accumulators (cells 10) are adapted to be dropped and deflected from their ballistic flight trajectory, in particular by compressed-air blows, into different directions for classification by their respective types.

## Revendications

1. Dispositif de triage des batteries usagées et/ou des accumulateurs usagés (éléments 10) selon leurs types, comprenant un poste d'identification (15) examiner, aux rayons X, les batteries usagées et/ou les accumulateurs usagés (éléments 10), ainsi qu'un détecteur (17) à mesurer l'intensité de dose et un poste de triage (24) en aval à trier les batteries usagées et/ou les accumulateurs usagés selon leurs types par référence à l'intensité de dose mesurée par ledit détecteur (17), **caractérisé en ce que** ledit détecteur (17) à mesurer l'intensité de dose du rayonnement X aux hautes intensités de dose jusqu'à 10⁴ Gy/h comprend un écran radio photographique (18) et un phototransistor (20), qui sont reliés l'un à l'autre moyennant un guide d'ondes optiques (19) faite en un matériau synthétique.

2. Dispositif selon la revendication 1, **caractérisé en ce que** ledit guide d'ondes optiques (19), en particulier un guide d'ondes mono conducteur, présente un diamètre de 1 mm et/ou **en ce que** ledit guide d'ondes optiques (19) a une longueur d'au moins 1 m et de 10 m en particulier.

3. Dispositif selon la revendication 1 or 2, **caractérisé en ce qu'**au moins deux détecteurs (18) ou respectivement écrans radio photographiques (18) sont superposés l'un sur l'autre.

4. Dispositif selon une quelconque des revendications 1 à 3, **caractérisé par** un convoyeur (13) à alimenter lesdites batteries usagées et/ou lesdits accumulateurs usagés (éléments 10) audit poste d'identification (15), dont la surface de manutention est inclinée en travers du sens de transport, relativement à l'horizontale, à un guide latéral (14) étant disposé afin d'empêcher, que les batteries usagées et/ou les accumulateurs usagés (éléments 10) tombent en bas.

5. Dispositif selon une quelconque des revendications 1 à 4, **caractérisé en ce que** ledit poste d'identification (15) est directement voisin audit poste de triage (24).

6. Dispositif selon la revendication 5, **caractérisé en ce que** la distance dudit poste d'identification (15) en écart dudit poste de triage (24) correspond à la double distance au maximum, de préférence à la distance au maximum, entre deux batteries usagées et/ou accumulateurs usagés (éléments 10) successifs dans la zone dudit poste d'identification (15).

7. Dispositif selon une quelconque des revendications 1 à 6, **caractérisé en ce que** lesdites batteries usagées et/ou lesdits accumulateurs usagés (éléments 10) sont aptes à être déversé et défléchi de leur trajectoire de vol balistique, en particulier par des coups de l'air comprimé, en des directions différentes pour leur triage par leurs types respectifs.
